# EUROPÄISCHE PATENTSCHRIFT

(11) **EP 1 375 605 B1**
(45) Veröffentlichungstag und Bekanntmachung des Hinweises auf die Patenterteilung: **14.02.2007**
(21) Anmeldenummer: 03012757.5
(22) Anmeldetag: 05.06.2003
(51) Int. Cl.: C09D 7/06, C08G 77/442, C08G 77/42

(54) **Verwendung von Polyacrylat-modifizierten Polysiloxanen als Verlaufmittel in Beschichtungsmitteln**
Use of with polyacrylate modified polysiloxanes as leveling agents in coating compositions
Utilisation de polysiloxanes modifiés avec des polyacrylates comme agent d'écoulement

(30) Priorität: 19.06.2002 DE 10227338
(43) Veröffentlichungstag der Anmeldung: 02.01.2004
(73) Patentinhaber: Byk-Chemie GmbH, 46483 Wesel (DE)
(72) Erfinder: Göbelt, Bernd, 46483 Wesel (DE); Bubat, Alfred, 46487 Wesel (DE); Frank, Albert, 46509 Xanten (DE); Haubennestel, Karlheinz, 46487 Wesel (DE)
(74) Vertreter: Leifert & Steffan

(56) Entgegenhaltungen:
- EP-A- 1 193 299
- EP-B- 0 355 826
- EP-B- 0 679 675
- EP-B- 1 233 031
- WO-A-00/71606
- WO-A-00/71607
- WO-A-98/01480
- US-B1- 6 197 883

## Beschreibung

Die Erfindung betrifft die Verwendung von Blockcopolymeren als Verlaufmittel für Beschichtungsmittel. Die Erfindung betrifft ferner Beschichtungsmittel, die die Blockcopolymere als Verlaufmittel enthalten.

Unter dem Begriff Beschichtungsmittel sind alle Mittel zu verstehen, die geeignet sind, zur Beschichtung von Oberflächen verwendet zu werden. Insbesondere sind hierunter Lacke zu verstehen, die in flüssiger Form oder als Pulverlacke vorliegen können. Die flüssigen Lacke können Lösungen und/oder Dispersionen von Bindemitteln und gegebenenfalls Pigmenten sowie Hilfsstoffen in organischen Lösemitteln, Wasser oder Mischungen von Lösemitteln und Wasser sein.

Lackoberflächen sind im Normalfall nicht ganz glatt, sondern weisen eine mehr oder weniger strukturierte Oberfläche auf, die als Welligkeit oder auch Orangenschalenstruktur bezeichnet wird. Diese Oberflächen können fein strukturiert mit einer kurzen Welle, oder grob strukturiert mit einer langen Welle sein. In den meisten Fällen ist diese Welligkeit nicht erwünscht. Es besteht eine Abhängigkeit der Struktur von der Art und der Zusammensetzung der Beschichtungsmittel, z. B. ob diese Beschichtungsmittel Lösemittel enthalten oder aber lösemittelfrei sind, wie dies bei Pulverlacken der Fall ist. Bei Pulverlacken ist es zwingend notwendig Verlaufmittel zuzusetzen, da ohne diese Verlaufmittel keine einigermaßen glatte Oberfläche erreicht werden kann.

Es ist bekannt, daß als verlaufsfördernde Mittel für Beschichtungen Poly(meth)acrylsäureester und Polysiloxane eingesetzt werden können.

Bei den Polysiloxanen handelt es sich meistens um Polydimethylsiloxane, Polymethylalkylsiloxane oder aber auch Polyether- oder Polyester-modifizierte Polydimethyl- oder Polymethylalkylsiloxane.

Bei den Poly(meth)acrylaten werden bevorzugt Polymere oder Copolymere von Acrylsäurealkylestern mit einer Kettenlänge des Alkylrestes von C₂ - C₁₂ eingesetzt, wie z. B. Ethylacrylat, n-Butylacrylat, 2-Ethylhexylacrylat oder auch Laurylacrylat, wobei die Schreibweise (Meth)acrylate Acrylate und Methacrylate bezeichnet. Die verwendeten Produkte besitzen teilweise Molekulargewichte von bis zu 100.000 g/mol. *US*-B-*6197883* beschreibt die Verwendung von Blockcopolymeren als verlaufsfördernde Substanzen.

Diese als verlaufsfördernde Mittel eingesetzten Poly(meth)acrylat(co)polymere können als solche oder als Lösungen in organischen Lösungsmitteln, aber auch als auf z. B. Kieselsäure aufgebrachte Pulver eingesetzt werden. Dies ist besonders bei der Verwendung in Pulverlacken üblich. Die Einsatzmengen solcher Produkte betragen üblicherweise 0,1 bis 2 Gew.-% bezogen auf die Beschichtungsformulierungen.

Die Wirkung dieser verlaufsfördernden Mittel beruht auf einer Grenzflächenaktivität an der Grenzfläche flüssig/gasförmig, an die sich diese Produkte aufgrund einer gewissen Unverträglichkeit mit dem eigentlichen Bindemittel des Beschichtungssystems orientieren. Diese Unverträglichkeit kann durch Erhöhung des Molekulargewichtes dieser Polymere gesteigert werden. Nachteilig ist dann jedoch, daß aufgrund dieser Unverträglichkeit eine gewisse Trübung der Beschichtung auftreten kann und die Viskosität des Verlaufmittels so hoch wird, daß eine leichte Handhabung für den Verwender nicht oder nur sehr schwer gegeben ist. Zusätzlich neigen Polysiloxane zu starken Unverträglichkeiten mit dem Beschichtungsmaterial, welches sich zum Beispiel in Kraterbildung im Beschichtungsfilm äußert. Dadurch ist der Einsatz und besonders die Einsatzmenge von Polysiloxanen begrenzt. Sie werden trotzdem häufig in Kombination mit Poly(meth)acrylsäureestern eingesetzt, da sie zusätzlich zu ihren verlaufsfördernden Eigenschaften die Oberflächenspannung des Beschichtungsmaterials senken und somit die Benetzung des Substrates durch das Beschichtungsmaterial unterstützen.

Aus der EP 1 193 299 A2 ist ein Verlaufmittel für Oberflächenbeschichtungen bekannt. Das Verlaufmittel ist ein verzweigtes Polymer, welches aus einem radikalisch oder ionisch polymerisierten Basismolekül besteht, in das makromonomere Einheiten, die an einem terminalen Ende eine monomere Einheit mit einer ethylenisch ungesättigten Bindung aufweisen und die ein Gewichtsmittel des Molekulargewichts von 1.000 bis 30.000 besitzen, radikalisch oder ionisch einpolymerisiert sind, wobei der Gewichtsanteil der makromonomeren Einheiten bezogen auf das Gesamtgewicht des verzweigten Polymers 1 bis 60 Gew.-% beträgt.

Eine Lösung dieser oben genannten Problematik ist mit den bestehenden Polymeren nur ungenügend gegeben, und es besteht ein dringender Bedarf nach neuen verlaufs- und gleichzeitig untergrundbenetzungsfördernden Mitteln, welche es ermöglichen, absolut glatte Beschichtungsfilme zu erzeugen.

Überraschenderweise wurde gefunden, daß diese Aufgabenstellung dadurch gelöst werden kann, daß den Oberflächenbeschichtungen Blockcopolymere bestehend aus einer Polysiloxanhauptkette und einem oder mehreren Blöcken, die aus ethylenisch ungesättigten Monomeren vorzugsweise durch kontrollierte, radikalische Polymerisation hergestellt sind, als Verlaufmittel zugesetzt werden. Zusätzlich zu den verlaufsfördernden Eigenschaften fördern diese Verbindungen die Benetzung von Substraten durch Erniedrigung der Oberflächenspannung, so daß auf die zusätzliche Verwendung von Polysiloxanen verzichtet werden kann.

Gegenstand der Erfindung ist daher die Verwendung von Blockcopolymeren, die aus einer Polysiloxan-Hauptkette und mindestens einem Block aus polymerisierten, ungesättigten Monomeren bestehen und erhältlich sind durch die Umsetzung mindestens eines Polysiloxan-haltigen Präpolymers, das mindestens eine übertragbare Gruppe enthält, mit ethylenisch ungesättigten Monomeren, als Verlaufmittel für Beschichtungsmittel.

Vorteilhafte Ausgestaltungen der vorliegenden Erfindung ergeben sich aus den Unteransprüchen.
Die zur Darstellung der erfindungsgemäßen Verlaufmittel verwendbaren und verwendeten Polymerisationsprozesse sind:
a) kontrollierte, radikalische Polymerisation mit Xanthogensäureestern als Überträger, wie beispielsweise in *WO 98*/*58974* beschrieben,
b) kontrollierte, radikalische Polymerisation mit Dithioestern als Überträger, wie beispielsweise in *WO 98*/*01478* beschrieben,
c) kontrollierte, radikalische Polymerisation mit Dithiocarbamaten als Überträger, wie beispielsweise in *WO 99*/*31144* beschrieben,
d) "Atom Transfer Radical Polymerization" (ATRP), wie beispielsweise in *WO 96*/*30421* oder in *Chem. Rev.* **2001,** *101,* 2921 beschrieben.

Im folgenden werden die Polymerisationsprozesse a) - c) als RAFT-Polymerisationen bezeichnet.

Das bevorzugte Polymerisationsverfahren zur Darstellung der Blockcopolymeren aus organisch modifizierten Polysiloxanen ist die "Atom Transfer Radical Polymerization".

Die Darstellung von Blockcopolymeren aus organisch modifizierten Polysiloxanen, die übertragbare Gruppen tragen, durch Kettenverlängerung mit Styrol oder (Meth)acrylaten mittels ATRP wurde beschrieben in:
- Y. Nakagawa, P. J. Miller, K. Matyjaszewski, *Polymer* **1998,** *39,* 5163 - 5170.
- L. Lutsen, G. P.-G. Cordina, R. G. Jones, F. Schue, *Eur. Polym. J.* **1998**, *34*, 1829 - 1837.
- P. J. Miller, K. Matyjaszewski, *Macromolecules* **1999**, *32*, 8760 - 8767.
- D. A. Brown, G. J. Price, *Polymer* **2001,** *42,* 4767-4771.
- K. Huan, L. Bes, D. M. Haddleton, E. Khoshdel, *J. Polym. Sci., Part A: Polym. Chem.* **2001**, *39,* 1833 - 1842.
- *WO 98*/*01480.*
- *WO 00*/*71606.*

Die Darstellung von Blockcopolymeren aus organisch modifizierten Polysiloxanen, die übertragbare Gruppen tragen, durch Kettenverlängerung mit (Meth)acrylaten und Vinylestern mittels RAFT-Polymerisation wurde beschrieben in *WO 02*/*08307.*

Zur Darstellung der erfindungsgemäß als Verlaufmittel zu verwendenden Polymeren wird ein Polysiloxan-haltiger Makroinitiator mit mindestens einer übertragbaren Gruppe hergestellt, in dessen Gegenwart die kontrollierte, radikalische Polymerisation von ethylenisch ungesättigten monomeren Einheiten durchgeführt wird.

Im folgenden werden Polysiloxan-haltige Makroinitiatoren als Polysiloxan-haltige Präpolymere bezeichnet. Die an dieses Polysiloxan-haltigen Präpolymeren chemisch gebundenen Polymerketten werden im folgenden als Seitenketten bezeichnet.

Die Polysiloxan-haltigen Präpolymere, die mittels ATRP zu den erfindungsgemäßen Verlaufmitteln umgesetzt werden, lassen sich folgendermaßen darstellen:

Das Polysiloxan-haltige Präpolymer wird ausgehend von endständig oder/und seitenständig H-terminierten Polysiloxanen in einer einstufigen oder mehrstufigen Reaktionssequenz hergestellt.

In der einstufigen Reaktion wird das endständige oder/und seitenständige H-terminierte Polysiloxan mit Monoallyl- oder Monovinylgruppen-tragenden Molekülen, die eine übertragbare Gruppe tragen, wie zum Beispiel Vinylbenzylchlorid oder 2-Bromisobuttersäureallylester, nach bekannten Verfahren, die zum Beispiel in *Macromolecules* **1999**, *32*, 8760 - 8767 beschrieben sind, umgesetzt.

In der mehrstufigen Reaktionssequenz wird das endständig oder/und seitenständig H-terminierte Polysiloxane mit Hydroxygruppen-tragenden ungesättigten Verbindungen nach bekannten Verfahren, wie zum Beispiel in *US-A-2924588* beschrieben, umgesetzt. Als Hydroxygruppen-tragende, ungesättigte Verbindungen eignen sich zum Beispiel Allylalkohol, 5-Hexenol, Ethylenglycolmonoallylether, Monoallyl- oder Monovinyl-terminierte Polyethylenglykole, Polypropylenglykole oder gemischte Polyethylen/propylenglykole.

Des Weiteren ist es möglich diese nun OH-terminierten Polysiloxan-haltigen Polymere mit Lactonen, wie zum Beispiel Valerolacton oder Caprolacton, zu OH-terminierten Polysiloxan-haltigen Blockcopolymeren nach bekannten Verfahren, wie zum Beispiel in *DE-A-3535283* beschrieben, umzusetzen.

Diese OH-terminierten Polysiloxan-haltigen Polymere und Blockcopolymere lassen sich mit 2-Halogencarbonsäuren (wie zum Beispiel 2-Brompropionsäure, 2-Bromisobuttersäure, 2-Chlorpropionsäure oder 2-Chlorisobuttersäure), 2-Halogencarbonsäureestern (wie zum Beispiel 2-Brompropionsäuremethylester, 2-Bromisobuttersäureethylester, 2-Chlorpropionsäuremethylester oder 2-Chlorisobuttersäureethylester), 2-Halogencarbonsäurehalogeniden (wie zum Beispiel 2-Brompropionsäurebromid, 2-Bromisobuttersäurebromid, 2-Chlorpropionsäurechlorid oder 2-Chlorisobuttersäurechlorid) nach bekannten Verfahren zu den Polysiloxan-haltigen Präpolymeren umsetzen. Verfahren dieser Art sind beispielsweise in Houben-Weyl: "Methoden der Organischen Chemie", Band E 5, S. 695 ff. beschrieben.

Es ist bekannt, daß auch geschützte und ungeschützte ungesättigte Amine wie Allylamin an endständig oder/und seitenständig H-terminierte Polysiloxane addiert werden können. Dies wird beispielsweise von van Saam und Speier in *J. Org. Chem.* **1959**, *24*, 119 beschrieben.
Diese Verbindungen können in gleicher Weise wie die OH-terminierten Polysiloxane zu Polysiloxan-haltigen Präpolymeren umgesetzt werden.

Die Darstellung der Polysiloxan-haltigen Präpolymere, die mittels RAFT-Polymerisationen zu den erfindungsgemäßen Verlaufmitteln umgesetzt werden, wird in *WO 02*/*08307* ausgehend von OH-terminierten Polysiloxan-haltigen Polymeren beschrieben.
Für die Verwendung von Polysiloxan-haltigen Blockcopolymeren anstatt der Polysiloxan-haltigen Polymeren gilt das oben genannte.

Die Polysiloxan-haltigen Präpolymere können linear, kammförmig oder verzweigt sein. Bevorzugt sind lineare oder kammförmige Polysiloxan-haltige Präpolymere.

Radikalisch polymerisierbare monomere Einheiten sind ausgewählt aus der Gruppe bestehend aus:
Alkyl(meth)acrylaten von geradkettigen, verzweigten oder cycloaliphatischen Alkoholen mit 1 bis 22 C-Atomen, wie zum Beispiel Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Behenyl(meth)acrylat, Cyclohexyl(meth)acrylat, lsobornyl(meth)acrylat,
Aryl(meth)acrylate, wie zum Beispiel Benzylmethacrylat oder Phenylacrylat, wobei die Arylreste jeweils unsubstituiert oder bis zu vierfach substituiert sein können; des Weiteren können monomere Einheiten mit funktionellen Gruppen verwendet werden, um eine spätere Einbindung in die jeweilige polymere Matrix oder das Bindemittel zu ermöglichen. So können als monomere Einheiten mit funktionellen Gruppen beispielsweise Acrylsäure, Methacrylsäure sowie Hydroxyalkyl(meth)acrylate von geradkettigen, verzweigten oder cycloaliphatischen Diolen mit 2 bis 36 C-Atomen verwendet werden, wie zum Beispiel 3-Hydroxypropylmethacrylat, 3,4-Dihydroxybutylmonomethacrylat, 2-Hydroxyethyl(meth)acrylat, 4-Hydroxybutyl(meth)acrylat, 2-Hydroxypropylmethacrylat, 2,5-Dimethyl-1,6-hexandiolmonomethacrylat, 1,10-Decandiolmonomethacrylat;
als monomere Einheiten können auch Etheralkohol-haltige und Polyethylenglykolhaltige monomere Einheiten verwendet werden, um eine Wasserlöslichkeit bzw. Wasseremulgierbarkeit der erfindungsgemäßen verzweigten Polymere zu ermöglichen. Es können Mono(meth)acrylate von Ethern, Polyethylenglykolen, Polypropylenglycolen oder gemischten Polyethylen/propylenglycolen mit 5 bis 80 C-Atomen verwendet werden, wie zum Beispiel Tetrahydrofurfurylmethacrylat, Methoxyethoxyethylmethacrylat, 1-Butoxypropylmethacrylat, 1-Methyl-(2-vinyloxy)ethylmethacrylat, Cyclohexyloxymethylmethacrylat, Methoxyethylmethacrylat, Benzyloxymethylmethacrylat, Furfurylmethacrylat, 2-Butoxyethylmethacrylat, 2-Ethoxyethylmethacrylat, Allyloxymethylmethacrylat, 1 -Ethoxybutylmethacrylat, Methoxymethylmethacrylat, 1-Ethoxyethylmethacrylat, Ethoxymethylmethacrylat, Poly(ethylenglycol)methylether(meth)acrylat, Poly(propylenglycol)methylether(meth)acrylat;
um eine Vernetzung der erfindungsgemäßen Hydroxy-funktionellen Verlaufmittel mit z. B. Acryl-Melamin-Formaldehydharzen zu ermöglichen, ist es auch möglich diese Hydroxylgruppen teilweise oder ganz mit Isocyanaten zu sekundären Carbamat-Gruppen umzusetzen, so daß bei der Vernetzung des Gesamtsystems dem Verlaufmittel genügend Zeit verbleibt, sich an der Grenzfläche zu orientieren, seine Wirkung dort zu entfalten und nach einer gewissen Zeitverzögerung mit dem Melaminformaldehydharz zu reagieren.

Auch der Einbau von Polyestern in Form Caprolacton- und/oder Valerolactonmodifizierter monomerer Einheiten in das polymere Basismolekül ist möglich. Bevorzugt werden Caprolacton- und/oder Valeroiacton-modifizierte Hydroxyalkyl(meth)acrylate mit einem mittleren Molekulargewicht von 220 g/möl bis 1.200 g/mol eingesetzt, wobei die Hydroxy(meth)acrylate bevorzugt von geradkettigen, verzweigten oder cycloaliphatischen Diolen mit 2 bis 8 C-Atomen abgeleitet sind.

Weitere radikalisch polymerisierbare monomere Einheiten sind zum Beispiel ausgewählt aus der Gruppe bestehend aus
(Meth)acrylaten von halogenierten Alkoholen, wie zum Beispiel
Perfluoralkyl(meth)acrylate mit 6 bis 20 C-Atomen;
Oxiranyl(meth)acrylaten, wie zum Beispiel 2,3-Epoxybutylmethacrylat, 3,4-Epoxybutylmethacrylat, 10,11-Epoxyundecylmethacrylat, 2,3-Epoxycyclohexylmethacrylat; Glycidylmethacrylat;
Vinylestern, wie zum Beispiel Vinylacetat;
Styrol und substituierte Styrole, wie zum Beispiel p-Methylstyrol.

Bevorzugte monomere Einheiten sind ausgewählt aus der Gruppe bestehend aus Acrylsäure, Methacrylsäure, Methylacrylat, Methylmethacrylat, Ethylacrylat, Ethylmethacrylat, n-Butylacrylat, n-Butylmethacrylat, i-Butylacrylat, i-Butylmethacrylat, t-Butylacrylat, t-Butylmethacrylat, Laurylacrylat, Laurylmethacrylat, 2-Ethylhexylacrylat, 2-Ethylhexylmethacrylat, Stearylacrylat, Stearylmethacrylat, Behenylacrylat, Behenylmethacrylat, Cyclohexylacrylat, Cyclohexylmethacrylat, Isobornylacrylat, Isobornylmethacrylat, Hydroxyethylacrylat, Hydroxyethylmethacrylat, Styrol, Acrylnitril, Triethylenglycolmonoacrylat, Triethylenglycolmonomethacrylat, Polyethylenglykolmonoacrylat, Polyethylenglykolmonomethacrylat, sowie Caprolacton- und/oder Valerolactonmodifiziertem Hydroxyethylacrylat und Caprolacton- und/oder Valerolacton modifiziertem Hydroxyethylmethacrylat mit einem Molekulargewicht zwischen 220 g/mol und 1.200 g/mol.

Diese Komponenten können einzeln oder als Mischungen eingesetzt werden, in Abhängigkeit der gewünschten Bindemittelverträglichkeit.
Diese Komponenten können gleichzeitig oder sequentiell einer Reaktionsmischung zugegeben werden, um erfindungsgemäß zu verwendende Polymere zu erhalten. Je nach Art der Zugabe entstehen Polysiloxan-haltige Polymere deren Seitenketten, die aus ethylenisch ungesättigten Monomeren hergestellt sind, als statistische Copolymere, Gradientencopolymere, Kammcopolymere und Blockcopolymere angesehen werden können.

Um statistische Copolymerseitenketten zu erhalten werden vielfach Mischungen vorgelegt, die alle zu polymerisierenden Monomere aufweisen. Auch eine kontinuierliche oder chargenweise Zugabe von Monomermischungen ist denkbar, wobei deren Zusammensetzungen über den Zeitraum der Zugabe im allgemeinen konstant gehalten wird, um eine statistische Verteilung der einzelnen Bausteine im Copolymeren zu gewährleisten.

Neben statistischen Copolymerseitenketten können gemäß dem Verfahren der vorliegenden Erfindung auch Gradienten- und Blockcopolymerseitenketten erhalten werden, indem man die Zusammensetzung der Monomeren, also die relative Konzentration der verschiedenen Monomere zueinander während der Polymerisation variiert.

Blockcopolymerseitenketten können dadurch erhalten werden, daß man verschiedene Monomere oder Mischungen von Monomeren chargenweise der Reaktionsmischung zugibt. Hierbei sollte der lebende Charakter von kontrollierten, radikalischen Polymerisationsverfahren berücksichtigt werden, so daß die Reaktion zwischen der Zugabe der verschiedenen Monomere bzw. Mischungen von Monomeren über einen längeren Zeitraum unterbrochen werden kann. Ein ähnliches Ergebnis kann auch dadurch erzielt werden, daß man bei einer kontinuierlichen

Zugabe von Monomeren deren Zusammensetzungen zu bestimmten Zeitpunkten sprunghaft ändert.

Gradientencopolymerseitenketten sind Copolymere, die z. B. aus zwei Monomeren A und B bestehen, in deren Einzelketten ein Gradient der Verteilung der Monomerbausteine entlang den Ketten besteht. Das eine Kettenende ist reich an A-und das andere Kettenende ist reich an B-Bausteinen. Diese Polymere sind durch kontrollierte, radikalische Polymerisationsverfahren leicht darstellbar, da diese einen lebenden Charakter haben. Somit können Gradientencopolymerseitenketten durch kontinuierliche Variation der während der Polymerisation zugegebenen Monomermischung erhalten werden.

Die Molekulargewichte Mₙ der erfindungsgemäßen Polymeren liegen im Bereich von 1.000 g/mol bis 100.000 g/mol, bevorzugt 2.000 g/mol bis 50.000 g/mol, besonders bevorzugt im Bereich von 2.000 g/mol bis 20.000 g/mol.

Das Polysiloxan-haltige Präpolymer hat vorteilhaft ein Molekulargewicht Mₙ von 500 g/mol bis 50.000 g/mol, bevorzugt von 500 g/mol bis 10.000 g/mol.

Der Gewichtsanteil der Polysiloxaneinheiten bezogen auf das Gesamtgewicht des Blockcopolymers beträgt vorteilhaft 2 bis 50 Gewichtsprozent, bevorzugt 2 bis 20 Gewichtsprozent.

Die Polymere können durch polymeranaloge Reaktion noch nachträglich modifiziert werden. Zum Beispiel kann durch die Reaktion eines Polymers, das hydroxyfunktionelle monomere Einheiten im Basismolekül enthält, mit Maleinsäureanhydrid eine reaktive Doppelbindung und Säurefunktion mit eingebaut werden. Weitere geeignete Anhydride zur Einführung der Säurefunktion sind z. B. Bernsteinsäureanhydrid und Phthalsäureanhydrid, wobei hydroxyfunktionelle monomere Einheiten innerhalb eines Polymers auch mit strukturell verschiedenen Anhydriden verestert werden können. Die Säurefunktion kann zur besseren Wasserlöslichkeit z. B. mit Alkanolaminen auch versalzt werden. Weiterhin können durch nachträgliche Acrylierung und/oder Methacrylierung an der Hydroxygruppe

Produkte erhalten werden, die sich auch bei strahlenhärtenden Prozessen, wie UV- und Elektronenstrahlhärtung, fest in Lacksysteme einbauen lassen.

Die erfindungsgemäßen Verlaufmittel werden in den Beschichtungsformulierungen in relativ geringen Mengen von 0,01 bis 5 Gew.-%, bevorzugt 0,05 bis 2 Gew.-%, ganz besonders bevorzugt 0,1 bis 1 Gew.-% eingesetzt.
Die erfindungsgemäßen Verlaufmittel können als Lösungen, Emulsionen oder als 100%-ige Stoffe eingesetzt werden, abhängig von der Art und Applikationsweise des Beschichtungsstoffes.

In lösungsmittelhaltigen Lacken werden bevorzugt Verlaufmittel eingesetzt, die in ähnlichen Lösemitteln angelöst sind wie die Lacke selbst. In strahlenhärtenden Systemen werden die Verlaufmittel bevorzugt in entsprechenden Monomeren angelöst. In Pulverlacken bevorzugt man eine 100%-ige Version des Verlaufmittels bzw. eine auf pulverförmigem Trägermaterial aufgebrachte Form dieser Verlaufmittel. Auch können diese Verlaufmittel gemäß der deutschen Patentanmeldung *DE-A-195 22 475* in Wachsschmelzen eingearbeitet werden und auf diese Art und Weise in rieselfähige feste Formen überführt werden, wenn die erfindungsgemäßen Verlaufmittel viskose, klebrige Harze darstellen. In wässrigen Pulverslurrys, einer Abart der Pulverlackierung, können die Verlaufmittel als wässrige Emulsion zugesetzt werden. Diese Emulsionen werden dem Stand der Technik gemäß mit Hilfe von Emulgatoren hergestellt.

Die Erfindung betrifft auch Beschichtungsmittel, die das erfindungsgemäße Verlaufmittel in einer Konzentration von 0,01 bis 5 Gew.-%, bevorzugt 0,05 bis 2 Gew.-%, besonders bevorzugt 0,1 bis 1 Gew.-%, enthalten.

### Herstellungsbeispiele

### Die Erfindung wird durch nachfolgende Beispiele zusätzlich erläutert:

Die verwendeten OH-funktionellen Polysiloxan-haltigen Polymere und Blockcopolymere sind in Tabelle 1 zusammengefasst und erläutert

**Tabelle 1 OH-funktionellen Polysiloxan-haltigen Polymere und Blockcopolymere**

| R¹¹-SiMe₂-O-[(SiMeR¹²O)ₓ-(SiMe₂O)_{y})]_{z}-SiMe₂-R¹³ | | | | | | | | | | |
|---|---|---|---|---|---|---|---|---|---|---|
| **Polymer** | **R¹¹** | **R¹²** | **R¹³** | **x** | **y** | **z** | **Mₙ (g/mol)** | **Polysiloxan Gew-%** | **Poly-caprolacton Gew-%** | **OH-Zahl** |
| **SOH1** | -(CH₂)₃OH | - | -(CH₂)₃OH | 0 | 14 | 1 | 1100 | 100 | 0 | 99.8 |
| **SOH2** | -(CH₂)₃OH ^{a)} | - | -(CH₂)₃OH ^{a)} | 0 | 14 | 1 | 2500 | 43.5 | 56.5 | 39.3 |
| **SOH3** | CH₃ | -(CH₂)₃OH | CH₃ | 1 | 16 | 5 | 6700 | 100 | 0 | 31.3 |
| **SOH4** | CH₃ | -(CH₂)₃OH ^{b)} | CH₃ | 1 | 16 | 5 | 11900 | 58 | 42 | 22.5 |
| **SOH5** | -(CH₂)₃OH | - | CH₃ | 0 | 24 | 1 | 2000 | 100 | 0 | 19.8 |

| | | | | | | | | | | |
|---|---|---|---|---|---|---|---|---|---|---|
| a) OH-Gruppe mit einem Polyester aus 6 mol ε-Caprolacton je mol OH-Gruppe verestert b) OH-Gruppe mit einem Polyester aus 8 mol ε-Caprolacton je mol OH-Gruppe verestert | | | | | | | | | | |

### A) Herstellungsbeispiele für die Polysiloxan-haltigen Präpolymere, die mittels ATRP zu den erfindungsgemäßen Verlaufmitteln umgesetzt werden, an Hand von M1

In einem mit Rührer, Thermometer und Rückflußkühler versehenen Glaskolben wurden 50 g des endständig difunktionellen Polysiloxans **SOH 1** mit 50 g Xylol und 11 g Dimethylcyclohexylamin gemischt und unter Rühren 20.5g α-Bromisobuttersäurebromid (BiB) tropfenweise hinzugegeben. 30 min nach Beendigung des Zutropfvorgangs wurde der Ansatz über Kieselgel filtriert und alle flüchtigen Bestandteile abdestilliert.
Der Umsatz wurde an Hand von ¹H- und ¹³C-NMR-Spektren zu 93% ermittelt.

Die weiteren in Tabelle 2 aufgeführten Beispiele wurden analog diesem Beispiel hergestellt.

**Tabelle 2 Polysiloxan-haltige Präpolymere**

| **Polysiloxan-haltige Präpolymer** | **SOH** | **SOH : BiB [g]** | **Umsatz** |
|---|---|---|---|
| M1 | SOH1 | 50 : 20.5 | 93% |
| M2 | SOH2 | 121:20.7 | 90% |
| M3 | SOH3 | 47.5:6.1 | 70% |
| M4 | SOH4 | 100:9.3 | 75% |
| M5 | SOH5 | 138:11.3 | 84% |

### B) Allgemeine Herstellung der erfindungsgemäßen Polymere an Hand von Polymer P2 mittels ATRP

In einem mit Rührer, Thermometer, Rückflußkühler und Stickstoffeinleitungsrohr versehenen Glaskolben wurden unter N₂-Atmosphäre 20 g des Polysiloxan-haltiges Präpolymers **M1** mit 25 g Xylol, 80 g n-Butylacrylat, 200 mg CuBr und 0.3 ml N,N,N',N",N"-Pentamethyldiethylentriamin bei ca. 80 °C für ca. fünf Stunden zur Reaktion gebracht. Nach Verdünnen des Reaktionsansatzes mit 180 g Xylol wurde über Kieselgel filtriert, um Verunreinigungen abzutrennen. Anschließend wird die verbliebene Lösung mit 0.5 g AIBN für zwei Stunden bei 90 °C zur Reaktion gebracht. Das mittlere Molekulargewicht wird durch Gel-Permeations-Chromatographie mit Polymethylmethacrylat als Vergleichsstandard zu ca. 6300 g/mol bestimmt.

Die weiteren in Tabelle 3 aufgeführten Beispiele wurden analog diesem Beispiel hergestellt.

### Erklärung der Abkürzungen:

- BA: = n-Butylacrylat
- BMA: = n-Butylmethacrylat
- EHA: = 2-Ethylhexylacrylat
- LA: = Laurylacrylat
- TEOMA: = Ethyltriethylenglycolmethacrylat
- AIBN: = 2,2'-Azobis(isobutyronitril)

**Tabelle 3 Umsetzungsprodukte der Polysiloxan-haltigen Präpolymere**

| **Polymer** | **Makroinitiator** | **Monomer** | **Makroinitiator : Monomer [g]** | **Gestalt** | **Mₙ (g/mol)** | **M_{w}/Mₙ** |
|---|---|---|---|---|---|---|
| P1 | M1 | BA | 20:30 | linear | 3000 | 1.3 |
| P2 | M1 | BA | 10:40 | linear | 6300 | 1.4 |
| P3 | M1 | BA/BMA 5:1 | 10:40 | linear | 6100 | 1.3 |
| P4 | M1 | BA/EHA 1:1 | 10:40 | linear | 6500 | 1.3 |
| P5 | M1 | BA/LA 10:1 | 10:40 | linear | 7200 | 1.5 |
| P6 | M1 | BA/ TEOMA 10:1 | 10: 40 | linear | 6600 | 1.3 |
| P7 | M1 | BA:Styrol 10:1 | 10:40 | linear | 8700 | 1.6 |
| P8 | M1 | BA | 10:80 | linear | 9100 | 1.6 |
| P9 | M2 | BA | 20 : 35 | linear | 5300 | 1.6 |
| P10 | M2 | BA | 20 : 70 | linear | 8200 | 1.6 |
| P11 | M3 | BA | 10: 80 | Kamm | 8800 | 5.7 |
| P12 | M4 | BA | 10:46 | Kamm | 9200 | 21.1 |
| P13 | M5 | BA | 10:40 | linear | 17800 | 1.4 |
| P14 | M5 | BA | 10:80 | linear | 29700 | 1.3 |

### C) Herstellungsbeispiele für das Polysiloxan-haltigen Präpolymere M6, das mittels einer RAFT-Polymerisation zu dem erfindungsgemäßen Verlaufmittel umgesetzt wurde

In einem mit Rührer, Thermometer und Rückflußkühler versehenen Glaskolben wurden 50 g **SOH 1** mit 50 g Xylol und 11 g Dimethylcyclohexylamin gemischt und unter Rühren 19.3 g α-Brompropionsäurebromid tropfenweise hinzugegeben. 30 min nach Beendigung des Zutropfvorgangs wurde der Ansatz über Kieselgel filtriert und alle flüchtigen Bestandteile abdestilliert. Der Umsatz wurde an Hand von ¹H- und ¹³C-NMR-Spektren zu 97% ermittelt. 20 g dieses Öls wurden in 400 ml Acetonitril bei Raumtemperatur mit 11.4 g Kaliumethylxanthogenat zwei Stunden zur Reaktion gebracht. Danach wurde das Acetonitril gegen 400 ml Diethylether ausgetauscht und die etherische Flüssigkeit filtriert. Nach Abdestillation des Ethers wurde der Umsatz ¹H-NMR spektroskopisch zu 74% bestimmt.

### D) Herstellung des erfindungsgemäßen Polymeres P15 mittels RAFT-Polymerisation

10 g **M6,** 80 g n-Butylacrylat und 0.25 g AIBN wurden in 40 g Xylol 8 Stunden auf 80°C erhitzt. Das mittlere Molekulargewicht wird durch Gel-Permeations-Chromatographie mit Polymethylmethacrylat als Vergleichsstandard zu ca. 10300 g/mol bestimmt; M_{w}/Mₙ = 1.5.

Die anwendungstechnische Prüfung der Polymere erfolgte durch Anwendung in einem Pulverlack und in einem konventionellen lösemittelhaltigen Lack.

### Ergebnisse Lösemittel-haltiger Acrylat/Melamin-Einbrennlack

Prüfsystem: Acrylat-Melamin-Einbrennlack, klar

### Zusammensetzung:

| | |
|---|---|
| Setalux 1760 VB 64 | 44,0% |
| Setalux C 91389 VX 45 | 16,5% |
| Luwipal 018 | 25,3% |
| Butyldiglykolacetat | 2,1% |
| Solvesso 150 | 4,8% |
| Butanol | 6,1% |
| Butyldiglykol mischen, dann Zugabe von | 1,2% |
| Butanol | 8,0% |
| Solvesso 150 | 3,8% |
| Butyldiglykol | 1,8% |

- Setalux 1760 VB 64 =: Acrylat-Einbrennharz Akzo Nobel Resins, Bergen op Zoom
- Setalux C 91389 VX 45 =: Acrylat-Einbrennharz Akzo Nobel Resins, Bergen op Zoom
- Luwipal 018 =: Melamin-Einbrennharz, BASF AG, Ludwigshafen

Die Verlaufmittel wurden einen Tag vor der Applikation eingearbeitet. Am Tag der Applikation wurde mit Solvesso 150 die Viskosität auf 24 Sekunden, DIN 4mm-Auslaufbecher eingestellt. Die Applikation erfolgte mittels Spritzautomaten.

Die Aushärtung erfolgte nach 30 Minuten Ablüftzeit bei 140°C in 30 Minuten.

### Beurteilung des Verlaufs:

1 = sehr gut bis 5 = schlecht

**Tabelle 4**

| | | | | | |
|---|---|---|---|---|---|
| **Verlaufmittel** | **Einsatzmenge** | **Schichtdicke** | **Lange Welle*** | **Kurze Welle*** | **Visuelle Beurteilung** |
| 0-Probe** | - | 40 µm | 45.5 | 73.5 | 5 |
| Modaflow** | 0.1 % | 40 µm | 5.5 | 8.4 | 3 |
| Byk 315** | 0.1% | 40 µm | 4.1 | 6.7 | 2 |
| Byk 315/Byk 355** im Verhältnis 1:1 | 0.1 % | 40 µm | 3.6 | 6.2 | 2 |
| P2 | 0.1 % | 40 µm | 1 | 3.9 | 1 |
| P4 | 0.1 % | 40 µm | 1.4 | 3.7 | 1 |
| P5 | 0.1% | 40 µm | 1.7 | 3.9 | 1 |
| P6 | 0.1 % | 40 µm | 1.5 | 3.4 | 1 |
| P7 | 0.1 % | 40 µm | 1.8 | 4.0 | 1 |
| P8 | 0.1 % | 40 µm | 1.4 | 3.6 | 1 |
| P10 | 0.1 % | 40 µm | 2.2 | 3.3 | 2 |
| P11 | 0.1 % | 40 µm | 3.2 | 2.9 | 2 |
| P12 | 0.1% | 40 µm | 1.7 | 2.9 | 1 |
| P14 | 0.1 % | 40 µm | 1.6 | 3.2 | 1 |
| P15 | 0.1 % | 40 µm | 1.5 | 3.7 | 1 |

| | | | | | |
|---|---|---|---|---|---|
| * gemessen mit folgendem Gerät: Wave scan von Byk Gardner ** Vergleichsbeispiele Modaflow: Poly(ethylacrylat/2-ethylhexylacrylat), Monsanto Byk 315: Polyestermodifiziertes Polysiloxan, Byk Chemie Byk 355: Polybutylacrylat, Byk Chemie | | | | | |

### Herstellung eines grauen Pulverlackes

### Zusammensetzung:

| | | |
|---|---|---|
| Uralac P5127 | 31,2% | Polyesterharz, DSM, |
| DER 663 UE | 31,2% | Epoxyharz, Dow |
| Kronos 2160 | 27,15% | Titandioxid, Kronos |
| Carbon black FW 200 | 0,1% | Rußpigment, Degussa |
| Blancfixe | 9,9% | Bariumsulfat, Sachtleben |
| Benzoin | 0,3% | DSM |
| Verlaufmittel | 0,15% | siehe Ergebnistabelle |

Die Verlaufmittel gemäß den Beispielen wurden als 10%ige Masterbatches in Uralac P5127 eingearbeitet. Dies wurde bei der Einwaage von Uralac P5127 berücksichtigt.

Alle Komponenten wurden zusammen eingewogen und 2,5 min bei 2000 UPM im einem Hochgeschwindigkeitsmischer vorgemischt. Danach wurden die Mischungen in einem Doppelschnecken-Extruder bei 120°C extrudiert. Die entstandene Harzschmelze wurde gekühlt, gebrochen und in einer Stiftmühle gemahlen. Das entstandene Pulver wurde über ein 100µm Sieb gegeben.

Die so entstandene Pulverlack-Mischung wurde dann elektrostatisch auf ein phosphatiertes Eisenbleche appliziert und die so beschichteten Bleche 12 Minuten bei 190°C ausgehärtet.

### Ergebnis:

| | | | |
|---|---|---|---|
| Schichtdicke: | 80 - 90 µm | 60 - 70 µm | Reduktion des Gleitwiderstandes gegenüber der 0-Probe |
| 0-Probe*,** | 3 | 3 | |
| Modaflow** | 2 | 3 | nein |
| P 2 | 1 | 2 | ja |

| | | | |
|---|---|---|---|
| * Pulverlack ohne Verlaufmittel ** Vergleichsbeispiele | | | |

### Bewertung der entstandenen Oberflächen:

1 = kraterfreie Oberfläche
2 = Oberfläche mit leichten Kratern
3 = Oberfläche mit deutlichen Kratern, zum Teil bis zum Untergrund

Die Beispiele und Vergleichsbeispiele zeigen, daß durch die Verwendung der Blockcopolymere, die durch die Umsetzung von Polysiloxan-haltigen Präpolymeren mit ethylenisch ungesättigten Monomeren hergestellt worden sind, signifikante Verbesserungen der Lackoberflächen erzielt werden. Dies gilt sowohl im Vergleich mit Polyacrylaten und Polysiloxanen als auch im Vergleich mit einer Kombination dieser Verlaufmittel.

## Patentansprüche

1. Verwendung von Blockcopolymeren, die aus einer Polysiloxan-Hauptkette und mindestens einem Block aus polymerisierten, ungesättigten Monomeren bestehen und erhältlich sind durch Umsetzung mindestens eines Polysiloxan-haltigen Präpolymers, das mindestens eine übertragbare Gruppe enthält, mit ethylenisch ungesättigten Monomeren in einer kontrollierten radikalischen Polymerisation, als Verlaufmittel für Beschichtungsmittel.

2. Verwendung nach Anspruch 1, **dadurch gekennzeichnet, dass** die Blockcopolymere ein Molekulargewicht Mₙ von 1000 g/mol bis 100.000 g/mol haben.

3. Verwendung nach Anspruch 1 bis 2, **dadurch gekennzeichnet, dass** das Polysiloxan-haltige Präpolymer ein Molekulargewicht Mₙ von 500 g/mol bis 50.000 g/mol hat.

4. Verwendung nach Anspruch 1 bis 3, **dadurch gekennzeichnet, dass** der Gewichtsanteil der Polysiloxaneinheiten bezogen auf das Gesamtgewicht des Polymers 2 bis 50 Gewichtsprozent beträgt.

5. Verwendung nach Anspruch 1 bis 4, **dadurch gekennzeichnet, dass** das Polysiloxan-haltige Präpolymer linear aufgebaut ist.

6. Verwendung nach Anspruch 1 bis 4, **dadurch gekennzeichnet, dass** das Polysiloxan-haltige Präpolymer kammartig aufgebaut ist.

7. Verwendung nach Anspruch 1 bis 6, **dadurch gekennzeichnet, dass** das Polysiloxan-haltige Präpolymer Polyester- und/oder Polyether-haltige Seitenketten trägt.

8. Verwendung nach Anspruch 1 bis 7, **dadurch gekennzeichnet, dass** das Polysiloxan-haltige Präpolymer mindestens eine endständige und/oder seitenständige übertragbare Gruppe trägt.

9. Verwendung nach Anspruch 1 bis 8, **dadurch gekennzeichnet, dass** das Blockcopolymer Blöcke aus radikalisch polymerisierten monomeren Einheiten umfaßt, die statistisch aus mehreren Monomeren aufgebaut sind.

10. Verwendung nach Anspruch 1 bis 8, **dadurch gekennzeichnet, dass** das Blockcopolymer Blöcke aus radikalisch polymerisierten monomeren Einheiten umfasst, die gradientenartig aus mehreren Monomeren aufgebaut sind.

11. Verwendung nach Anspruch 1 bis 8, **dadurch gekennzeichnet, dass** das Blockcopolymer Blöcke aus radikalisch polymerisierten monomeren Einheiten umfasst, die wiederum blockartig aus zwei oder mehreren Monomeren aufgebaut sind.

12. Verwendung nach Anspruch 1 bis 11, **dadurch gekennzeichnet, dass** im Blockcopolymer vorhandene funktionelle Hydroxylgruppen verestert sind mit mindestens einer Verbindung ausgewählt aus der Gruppe bestehend aus Maleinsäureanhydrid, Bernsteinsäureanhydrid, Phthalsäureanhydrid, Acrylsäure und Methacrylsäure.

13. Verwendung nach Anspruch 1 bis 12, **dadurch gekennzeichnet, dass** die Blockcopolymere durch "Atom Transfer Radical Polymerization" hergestellt werden.

14. Verwendung nach Anspruch 13, **dadurch gekennzeichnet, dass** das Blockcopolymer radikalisch polymerisierte Einheiten umfasst, die ausgewählt sind aus der Gruppe der Alkylacrylate und Alkylmethacrylate von geradkettigen, verzweigten oder cycloaliphatischen Alkoholen mit 1 bis 22 C-Atomen, Aralkylacrylate und Aralkylmethacrylate von Aralkylalkoholen mit 8 bis 18 C-Atomen, Polyethylenglykolmonoacrylate oder Polyethylenglykolmonomethacrylate mit 5 bis 80 C-Atomen, Hydroxyalkylmonoacrylate und Hydroxyalkylmonomethacrylate von geradkettigen, verzweigten oder cycloaliphatischen Diolen mit 2 bis 36 C-Atomen, Perfluoralkylacrylate und Perfluoralkylmethacrylate mit 6 bis 20 C-Atomen, Styrol und substituierte Styrole, Acrylnitril, sowie Caprolacton- und/oder Valerolacton-modifizierte Hydroxyalkylacrylate und Caprolacton- und/oder Valerolacton-modifizierte Hydroxyalkylmethacrylate mit einem mittleren Molekulargewicht von 220 g/mol bis 1200 g/mol, wobei die Hydroxyalkylmonoacrylate und die Hydroxyalkylmonomethacrylate bevorzugt von geradkettigen, verzweigten oder cycloaliphatischen Diolen mit 2 bis 8 C-Atomen abgeleitet sind.

15. Verwendung nach Anspruch 1 bis 14, **dadurch gekennzeichnet, dass** die Blockcopolymere in einer Menge von 0,01 bis 5 Gew.-% bezogen auf das Gesamtgewicht von Beschichtungsmittel und Verlaufmittel verwendet werden.

16. Beschichtungsmittel enthaltend als Verlaufmittel 0,01 bis 5 Gew.-% bezogen auf das Gesamtgewicht von Beschichtungsmittel und Verlaufmittel eines oder mehrerer Blockcopolymere, die aus einer Polysiloxan-Hauptkette und mindestens einem Block aus polymerisierten, ungesättigten Monomeren bestehen und erhältlich sind durch Umsetzung mindestens eines Polysiloxanhaltigen Präpolymers, das mindestens eine übertragbare Gruppe enthält, mit ethylenisch ungesättigten Monomeren in einer kontrollierten radikalischen Polymerisation.

## Claims

1. Use of block copolymers which are composed of a polysiloxane main chain and at least one block of polymerized unsaturated monomers and are obtainable by reacting at least one polysiloxane-containing prepolymer containing at least one transferable group with ethylenically unsaturated monomers in a controlled free-radical addition polymerization as levelling agents for coating compositions.

2. Use according to Claim 1, **characterized in that** the block copolymers have a molecular weight Mₙ of from 1000 g/mol to 100000 g/mol.

3. Use according to Claim 1 or 2, **characterized in that** the polysiloxane-containing prepolymer has a molecular weight Mₙ of from 500 g/mol to 50000 g/mol.

4. Use according to Claims 1 to 3, **characterized in that** the weight fraction of the polysiloxane units based on the overall weight of the polymer is from 2 to 50 per cent by weight.

5. Use according to Claims 1 to 4, **characterized in that** the polysiloxane-containing prepolymer is of linear construction.

6. Use according to Claims 1 to 4, **characterized in that** the polysiloxane-containing prepolymer is of comblike construction.

7. Use according to Claims 1 to 6, **characterized in that** the polysiloxane-containing prepolymer carries polyester-containing and/or polyether-containing side chains.

8. Use according to Claims 1 to 7, **characterized in that** the polysiloxane-containing prepolymer carries at least one terminal and/or lateral transferable group.

9. Use according to Claims 1 to 8, **characterized in that** the block copolymer comprises blocks of free-radically polymerized monomeric units composed randomly of two or more monomers.

10. Use according to Claims 1 to 8, **characterized in that** the block copolymer comprises blocks of free-radically polymerized monomeric units composed in gradient fashion of two or more monomers.

11. Use according to Claims 1 to 8, **characterized in that** the block copolymer comprises blocks of free-radically polymerized monomeric units composed in turn in block fashion of two or more monomers.

12. Use according to Claims 1 to 11, **characterized in that** functional hydroxyl groups present in the block copolymer have been esterified with at least one compound selected from the group consisting of maleic anhydride, succinic anhydride, phthalic anhydride, acrylic acid and methacrylic acid.

13. Use according to Claims 1 to 12, **characterized in that** the block copolymers are prepared by atom transfer radical polymerization.

14. Use according to Claim 13, **characterized in that** the block copolymer comprises free-radically polymerized units selected from the group of the alkyl acrylates and alkyl methacrylates of straight-chain, branched or cycloaliphatic alcohols having 1 to 22 carbon atoms, aralkyl acrylates and aralkyl methacrylates of aralkyl alcohols having 8 to 18 carbon atoms, polyethylene glycol monoacrylates or polyethylene glycol monomethacrylates having 5 to 80 carbon atoms, hydroxyalkyl monoacrylates and hydroxyalkyl monomethacrylates of straight-chain, branched or cycloaliphatic diols having 2 to 36 carbon atoms, perfluoroalkyl acrylates and perfluoroalkyl methacrylates having 6 to 20 carbon atoms, styrene and substituted styrenes, acrylonitrile, and also caprolactone- and/or valerolactone-modified hydroxyalkyl acrylates and caprolactone- and/or valerolactone-modified hydroxyalkyl methacrylates having an average molecular weight of from 220 g/mol to 1200 g/mol, the hydroxyalkyl monoacrylates and the hydroxyalkyl monomethacrylates preferably being derived from straight-chain, branched or cycloaliphatic diols having 2 to 8 carbon atoms.

15. Use according to Claims 1 to 14, **characterized in that** the block copolymers are used in an amount of from 0.01 to 5% by weight based on the total weight of coating composition and levelling agent.

16. Coating compositions comprising as levelling agent(s) from 0.01 to 5% by weight, based on the total weight of coating agent and levelling agent, of one or more block copolymers which are composed of a polysiloxane main chain and at least one block of polymerized unsaturated monomers and are obtainable by reacting at least one polysiloxane-containing prepolymer containing at least one transferable group with ethylenically unsaturated monomers in a controlled free-radical addition polymerization.

## Revendications

1. Utilisation de copolymères séquencés composés d'une chaîne principale de polysiloxane et d'au moins une séquence de monomères insaturés, polymérisés et pouvant être obtenus par réaction d'au moins un prépolymère contenant un polysiloxane, qui contient au moins un groupe transférable, avec des monomères éthyléniquement insaturés, au cours d'une polymérisation radicalaire contrôlée, en tant qu'agent d'écoulement pour un agent de revêtement.

2. Utilisation selon la revendication 1, **caractérisée en ce que** les copolymères séquencés présentent un poids moléculaire Mₙ allant de 1 000 g/mol à 100 000 g/mol.

3. Utilisation selon la revendication 1 à 2, **caractérisée en ce que** le prépolymère contenant un polysiloxane présente un poids moléculaire Mₙ allant de 500 g/mol à 50 000 g/mol.

4. Utilisation selon l'une quelconque des revendications 1 à 3, **caractérisée en ce que** le pourcentage en poids des unités de polysiloxane rapporté au poids total du polymère s'élève de 2 à 50 % en poids.

5. Utilisation selon l'une quelconque des revendications 1 à 4, **caractérisée en ce que** le prépolymère contenant un polysiloxane a une structure linéaire.

6. Utilisation selon l'une quelconque des revendications 1 à 4, **caractérisée en ce que** le prépolymère contenant un polysiloxane a une structuré en peigne.

7. Utilisation selon l'une quelconque des revendications 1 à 6, **caractérisée en ce que** le prépolymère contenant un polysiloxane porte des chaînes latérales contenant du polyester et/ou du polyéther.

8. Utilisation selon l'une quelconque des revendications 1 à 7, **caractérisée en ce que** le prépolymère contenant un polysiloxane porte au moins un groupe en position terminale et/ou latérale transférable.

9. Utilisation selon l'une quelconque des revendications 1 à 8, **caractérisée en ce que** le copolymère séquencé comprend des séquences d'unités monomères polymérisées de façon radicalaire qui statistiquement ont une structure comprenant plusieurs monomères.

10. Utilisation selon l'une quelconque des revendications 1 à 8, **caractérisée en ce que** le copolymère séquencé comprend des séquences d'unités monomères polymérisées de façon radicalaire qui en gradient ont une structure comprenant plusieurs monomères.

11. Utilisation selon l'une quelconque des revendications 1 à 8, **caractérisée en ce que** le copolymère séquencé comprend des séquences d'unités monomères polymérisées de façon radicalaire qui elles aussi ont, une structure séquencée comprenant deux monomères ou plus.

12. Utilisation selon l'une quelconque des revendications 1 à 11, **caractérisée en ce que** des groupes hydroxyle fonctionnels présents dans le copolymère séquencé sont estérifiés avec au moins un composé sélectionné dans le groupe consistant en de l'anhydride maléique, de l'anhydride succinique, de l'anhydride phtalique, de l'acide acrylique et de l'acide méthacrylique.

13. Utilisation selon l'une quelconque des revendications 1 à 12, **caractérisée en ce que** les copolymères séquencés sont fabriqués par polymérisation radicalaire contrôlée par transfert d'atomes (PRTA).

14. Utilisation selon la revendication 13, **caractérisée en ce que** le copolymère séquencé comprend des unités polymérisées de façon radicalaire qui sont sélectionnées dans le groupe des acrylates d'alkyle et des méthacrylates d'alkyle d'alcools à chaîne droite, ramifiés ou cycloaliphatiques ayant de 1 à 22 atomes de carbone, des acrylates d'aralkyle et des méthacrylates d'aralkyle d'alcools aralkyliques ayant de 8 à 18 atomes de carbone, des monoacrylates de polyéthylène glycol ou des monométhacrylates de polyéthylène glycol ayant de 5 à 80 atomes de carbone, des monoacrylates d'hydroxyalkyle et des monométhacrylates d'hydroxyalkyle de diols à chaîne droite, ramifiés ou cycloaliphatiques ayant de 2 à 36 atomes de carbone, des acrylates de perfluoroalkyle et des méthacrylates de perfluoroalkyle ayant de 6 à 20 atomes de carbone, du styrène et des styrènes substitués, de l'acrylonitrile tel que des acrylates d'hydroxyalkyle modifiés par de la caprolactone et/ou valérolactone et des méthacrylates d'hydroxyalkyle modifiés par de la caprolactone et/ou valérolactone ayant un poids moléculaire moyen allant de 220 g/mol à 1 200 g/mol, les monoacrylates d'hydroxyalkyle et les monométhacrylates d'hydroxyalkyle étant de préférence dérivés de diols à chaîne droite, ramifiés ou cycloaliphatiques ayant de 2 à 8 atomes de carbone.

15. Utilisation selon l'une quelconque des revendications 1 à 14, **caractérisée en ce que** les copolymères séquencés sont utilisés en une quantité allant de 0,01 à 5 % en poids rapportée au poids total de l'agent de revêtement ou de l'agent d'écoulement.

16. Agent de revêtement contenant, en tant qu'agent d'écoulement, de 0,01 à 5 % en poids, rapporté au poids total de l'agent de revêtement et de l'agent d'écoulement, d'un ou de plusieurs copolymères séquencés, composés d'une chaîne principale de polysiloxane et d'au moins une séquence de monomères insaturés, polymérisés et pouvant être obtenus par réaction d'au moins un prépolymère contenant un polysiloxane, qui contient au moins un groupe transférable, avec des monomères éthyléniquement insaturés au cours d'une polymérisation radicalaire contrôlée.
